# EUROPÄISCHE PATENTSCHRIFT

(11) **EP 2 960 451 B1**
(45) Veröffentlichungstag und Bekanntmachung des Hinweises auf die Patenterteilung: **09.05.2018**
(21) Anmeldenummer: 15000202.0
(22) Anmeldetag: 23.01.2015
(51) Int. Cl.: F01N 3/031, B01D 46/00

(54) **Abgasanlage für Brennkraftmaschinen**
Waste gas system for combustion engines
Système d'échappement pour moteurs à combustion interne

(30) Priorität: 25.06.2014 DE 102014009263
(43) Veröffentlichungstag der Anmeldung: 30.12.2015
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- EP-A1- 0 638 709
- DE-A1- 10 000 921
- DE-A1- 10 206 805
- DE-T2- 3 876 696
- DE-T2- 69 432 977
- US-A- 5 377 716
- US-A1- 2013 111 879

## Beschreibung

Die Erfindung betrifft eine Abgasanlage für Brennkraftmaschinen nach dem Oberbegriff des Anspruchs 1 sowie ein Fahrzeug oder Wasserfahrzeug, insbesondere Schiff, nach Anspruch 11. Um die bei der Verbrennung von Kraftstoffen in Brennkraftmaschinen, beispielsweise Dieselmotoren, entstehenden Schadstoffe zu verringern, ist der Einsatz von Abgasreinigungs- bzw. Abgasnachbehandlungseinrichtungen allgemein bekannt. Derartige Abgasreinigungseinrichtungen zur Nachbehandlung des Abgases können zum Beispiel Partikelfilter, SCR-Katalysatoren etc. sein.

Immer strengere Abgasvorschriften machen mittlerweile auch bei in Schiffen eingesetzten Motoren eine Abgasnachbehandlung, zum Beispiel in Form von Partikelfiltern, SCR-Katalysatoren zur NOx-Reduzierung und DeSOx-Anlagen erforderlich.

Insbesondere bei relativ geringen Strömungsquerschnitten in den Abgasreinigungseinrichtungen, wie dies beispielsweise bei Schiffsmotoren der Fall ist, kann es gegebenenfalls zu einer Verstopfung dieser Abgasreinigungseinrichtungen kommen. Dies ist umso mehr der Fall, wenn die Brennkraftmaschine mit Kraftstoffen schlechter Qualität betrieben wird, was ebenfalls relativ häufig bei Schiffsmotoren der Fall ist, aber ebenso bei Brennkraftmaschinen von Fahrzeugen der Fall sein kann.

Eine derartige fortschreitende Verstopfung einer Abgasreinigungseinrichtung führt zu einem starken Anstieg des Abgasgegendrucks und hat eine eventuelle Motorschädigung zur Folge.

Aus diesem Grund werden Bypassleitungen vorgesehen, mittels denen die Abgasreinigungseinrichtungen bei Bedarf überbrückt werden können. Dadurch wird somit auch im Störungsfall ein sicherer Betrieb der Brennkraftmaschine und damit der Betrieb eines Fahrzeuges bzw. die Manövrierbarkeit eines Schiffes sichergestellt.

Um die Bypassleitung zu öffnen werden dabei üblicherweise Absperrvorrichtungen in Form von Abgasklappen oder Abgasschiebern verwendet. Allerdings besteht hier, aufgrund der Tatsache, dass sie nur sehr selten verwendet und zusätzlich permanent dem Abgas ausgesetzt sind, die Gefahr, dass sie sich festsetzen und nicht mehr geöffnet werden können. Zudem ist meist eine Luftspülung an den Wellendurchgängen der Abgasklappe vorzusehen, um einen Abgasaustritt in die Umgebung zu vermeiden. Dies führt zu einem relativ hohen apparativen Aufwand und zu hohen Investitions- und Betriebskosten, da permanent Druckluft zur Verfügung gestellt werden muss.

Des Weiteren ist es aus der DE 102 06 805 A1 bekannt, einen Rußfilter zur Reinigung von Abgasen einer Verbrennungsanlage eines Motors eines Kraftfahrzeuges mit Mitteln zur Reduzierung eines in dem Rußfilter herrschenden Abgasgegendrucks vorzusehen, wobei die Mittel zur Reduzierung des Abgasgegendrucks wenigstens eine Sollbruchstelle in einem Filterkörper des Filters und/oder in einer Bypassleitung des Filters aufweisen sollen. Die Sollbruchstelle in der Bypassleitung ist dabei als Berstplatte ausgebildet. Damit soll bei verstopftem Rußfilter ein Absterben bzw. eine Beschädigung der Brennkraftmaschine vermieden werden. Die in der Bypassleitung angeordnete Berstplatte kann dabei in Abhängigkeit von einem gemessenen Abgasgegendruck mechanisch zum Bersten gebracht werden, soll jedoch hauptsächlich ohne Notwendigkeit zusätzlicher Maßnahmen zum Bersten gebracht werden.

Ein Problem derartiger Berstplatten in Abgasanlagen einer Brennkraftmaschine ist jedoch, dass diese bei einem eventuellen betriebsbedingten erwünschten Anstieg des Abgasgegendrucks in unerwünschter Weise unkontrolliert bersten können und somit die Bypassleitung in unerwünschter Weise freigegeben wird.

Demgegenüber ist es Aufgabe der vorliegenden Erfindung, eine Abgasanlage für Brennkraftmaschinen zu schaffen, mittels der die bedarfsweise Freigabe eines, einer Abgasreinigungseinrichtung zugeordneten Bypass- bzw. Abzweigkanals auf funktionssichere Weise gesteuert werden kann.

Diese Aufgabe wird gelöst mit den Merkmalen der unabhängigen Patentansprüche. Vorteilhafte Ausgestaltungen hierzu sind Gegenstand der darauf rückbezogenen Unteransprüche.

Gemäß Anspruch 1 wird eine Abgasanlage für Brennkraftmaschinen vorgeschlagen, die eine Abgasleitung aufweist, in der wenigstens eine Abgasreinigungseinrichtung (zum Beispiel ein Partikelfilter, ein SCR-Katalysator und/oder eine DeSOx-Anlage, etc.) angeordnet ist. Ferner weist die Abgasanlage wenigstens einen parallel zu der wenigstens einen Abgasreinigungseinrichtung angeordneten Abzweigkanal (zum Beispiel wenigstens einen stromauf der wenigstens einen oder stromauf wenigstens einer Abgasreinigungseinrichtung abzweigenden Abzweigkanal), insbesondere in Form einer Abzweig- bzw. Bypassleitung, auf, die mittels wenigstens einer Berstscheibe abgesperrt ist, wobei der Berstscheibe eine mittels einer Steuereinrichtung in Abhängigkeit von wenigstens einem definiert vorgegebenen Parameter, insbesondere in Abhängigkeit von einem definiert vorgegebenen Schwellwert und/oder Abgasparameter (zum Beispiel dem Überschreiten eines Abgasgegendrucks), ansteuerbare und aktivierbare Bersthilfe zugeordnet ist. Erfindungsgemäß ist vorgesehen, dass die Bersthilfe durch ein gasförmiges oder flüssiges Arbeitsmedium gebildet ist, mittels dem oder mittels denen die wenigstens eine Berstscheibe zur Freigabe der Abgasströmung durch den Abzweigkanal schwächbar und/oder zerstörbar ist.

Mit einer derartigen Bersthilfe kann somit die wenigstens eine Berstscheibe zum genau gewünschten Zeitpunkt auf kontrollierte Weise zerstört werden und damit zum geeigneten Zeitpunkt die Abgasströmung über den Abzweigkanal freigegeben werden. Dies hilft wesentlich, die Betriebssicherheit der Abgasanlage im Hinblick auf die Freigabe des Abzweigkanals zu erhöhen.

Die Begrifflichkeit Abzweigkanal ist hierbei in einem umfassenden Sinne zu verstehen und soll nicht nur solche Lösungen umfassen, bei denen der Kanal durch eine separate Leitung gebildet ist. Vielmehr soll dieser Begriff ausdrücklich jedwede Ausgestaltung umfassen, mit der ein Abgasstrom im Sinne eines Bypasses umlenkbar bzw. ein Teilstrom von einem Abgasstrom abzweigbar ist und somit den an sich vorgegebenen (Haupt-)Strömungsweg eines Abgasstroms verlässt.

Um die Bersthilfe zum geeigneten Zeitpunkt anzusteuern bzw. zu aktivieren, ist bevorzugt wenigstens ein Sensor stromauf und/oder stromab der Abgasreinigungseinrichtung angeordnet, mittels dem der wenigstens eine Parameter erfassbar ist, in Abhängigkeit von dem die Bersthilfe ansteuerbar und aktivierbar ist. Beispielsweise kann die Bersthilfe in Abhängigkeit von einer mittels mehrerer Sensoren erfolgten Messung des Abgasgegendrucks über eine Abgasreinigungseinrichtung aktiviert werden, um sicherzustellen, dass die Berstscheibe genau dann zum Bersten ge-bracht wird, wenn dies erforderlich ist. Selbstverständlich kann die Aktivierung der Berstscheibe aber auch in Abhängigkeit von anderen Abgasparametern erfolgen, zum Beispiel in Abhängigkeit einer Abgastemperatur und/oder einer Stoffkonzentration im Abgas, um nur einige weitere Beispiele zu nennen.

Gemäß einer weiteren Ausführungsform kann die Berstscheibe wenigstens bereichsweise doppelwandig ausgebildet sein und einen zwischen gegenüberliegenden Wandbereichen liegenden Freiraum aufweisen, wobei der Freiraum mittels einer Zuführeinrichtung dergestalt mit dem gasförmigen oder flüssigen Arbeitsmedium beschickbar ist, das ein vom Freiraum und damit von innen her auf die Berstscheibenwände wirkender Berstdruck aufbaubar ist. Besonders bevorzugt sind hier zwei voneinander beabstandete und/oder im Wesentlich parallel zueinander ausgerichtete Berstscheiben vorgesehen, die zwischen sich einen, den Freiraum ausbildenden Spaltabstand aufweisen. Auch mit einer derartigen Bersthilfe wird ein besonders funktionssicheres Bersten der Berstscheibeneinrichtung bzw. -anordnung möglich.

Gemäß einer weiteren alternativen Ausführungsform ist der Berstscheibe eine Druckluftzuführeinrichtung als Bersthilfe zugeordnet, und zwar bevorzugt dergestalt, dass eine Mündungsöffnung der Druckluftzuführeinrichtung im Wesentlichen mittig auf die Berstscheibe gerichtet ist. Mittels einer derartigen Druckluftzuführeinrichtung kann eine definiert vorgegebene Anzahl von Druckluftimpulsen und/oder -stößen, vorzugsweise intervall- oder pulsartig, gesteuert auf einen definierten Bereich der Berstscheibe aufgebracht werden. Bei dieser Ausführungsform handelt es sich bevorzugt um eine einwandige bzw. einlagige Berstscheibenausgestaltung. Anstelle Druckluft kann bei dieser Ausführungsvariante selbstverständlich auch jedwedes andere geeignete gasförmige bzw. ausdrücklich auch flüssige Medium Verwendung finden. Die Begrifflichkeit Druckluft ist hier somit ausdrücklich in einem weiten und nicht auf Druckluft als solche beschränkten Sinne zu verstehen.

Gemäß einer weiteren besonders bevorzugten Ausgestaltung weist die wenigstens eine Berstscheibe oder im Falle mehrerer Berstscheiben wenigstens eine der Berstscheiben, insbesondere wenigstens die stromauf liegende Berstscheibe, wenigstens eine definierte Sollbruchstelle auf. Mit derartigen Sollbruchstellen ist eine individuelle Anpassung und Auslegung der Berstscheibe an bzw. für den jeweiligen Einsatzfall möglich. Zudem können mit derartigen Sollbruchstellen genau diejenigen Bereiche festgelegt und definiert werden, an denen die Berstscheibe letztendlich bersten soll.

Insbesondere in Verbindung mit der Sicherstellung einer Gasdichtheit bei der Anordnung einer einzigen Berstscheibe ist es von Vorteil, wenn die wenigstens eine Sollbruchstelle durch eine, die Berstscheibenwand nicht durchdringende Kerbe gebildet ist. Bevorzugt ist in diesem Fall zudem eine Ausgestaltung, bei der eine Sollbruchstellen aufweisende Berstscheibe mehrere Kerben aufweist, die ein definiert vorgegebenes Sollbruchstellenmuster ausbilden. Damit ist es möglich, die Berstscheibe, nach dem Initiieren des Berstvorgangs mittels der Bersthilfe, in einer gewünschten Weise aufreißen bzw. aufplatzen zu lassen.

Das Sollbruchstellenmuster kann grundsätzlich auf unterschiedliche Art und Weise ausgebildet sein. Besonders bevorzugt ist jedoch ein Aufbau, bei dem mehrere voneinander beabstandete und sich von einem mittleren Berstscheibenbereich ausgehend nach radial außen zum Berstscheibenrand hin erstreckende Sollbruchstellen vorgesehen sind, die eine Sollbruchstellenlinie ausbilden. Wenigstens zwei derartiger Sollbruchstellenlinien können dann in Umfangsrichtung der Berstscheibe dergestalt voneinander beabstandet sein, dass die zwischen zwei Sollbruchstellenlinien liegenden Berstscheibenbereiche ein verlagerbares, insbesondere verschwenkbares, Berstscheibenwandsegment ausbilden. Diese Berstscheibenwandsegmente bilden dann nach dem Bersten regelmäßig Lappen aus, die sehr gut und kontrolliert verlagert bzw. verschwenkt werden können zur definierten Freigabe der Abgasströmung durch den Abzweigkanal.

Der Abzweigkanal, der zum Beispiel durch eine separate Abzweig- bzw. Bypassleitung gebildet ist, mündet bevorzugt stromab der wenigstens einen Abgasreinigungseinrichtung oder stromab wenigstens einer Abgasreinigungseinrichtung wieder in die Abgasleitung ein. Der Abzweigkanal kann grundsätzlich aber auch eine nicht mehr in die Abgasleitung, von der sie abzweigt, einmündende Abgasleitung des Abgasstrangs sein.

Desweiteren wird ein Fahrzeug oder Wasserfahrzeug bzw. Schiff mit einer Brennkraftmaschine in einer Abgasanlage beansprucht, wie sie zuvor bereits ausführlich gewürdigt worden ist.

Die Erfindung wird nachfolgend anhand einer Zeichnung näher erläutert.

Es zeigen:
- Fig. 1: schematisch und beispielhaft eine Abgasanlage einer Brennkraftmaschine mit einer Abgasleitung, in der eine Abgasreinigungseinrichtung angeordnet ist und mit einer Bypassleitung als Abzweigkanal zur Abgasreinigungseinrichtung,
- Fig. 2: schematisch eine Berstscheibe mit einem elektrischen Heizelement als Bersthilfe,
- Fig. 3: schematisch eine Seitenansicht einer Berstscheibe mit einem Sprengelement als Bersthilfe,
- Fig. 4: schematisch eine doppelwandige Berstscheibenanordnung mit einem, mit einem gasförmigen oder flüssigen Arbeitsmedium als Bersthilfe beschickbaren Freiraum,
- Fig. 5: schematisch eine Berstscheibe mit zugeordneter Druckluftzuführeinrichtung als Bersthilfe,
- Fig. 6: eine schematische Darstellung einer weiteren Abgasanlage mit einem abgasleitungsseitig ausgebildeten bzw. eingesetzten Gehäuse, in dem sowohl die Berstscheibeneinrichtung als auch die wenigstens eine Abgasreinigungseinrichtung aufgenommen ist.

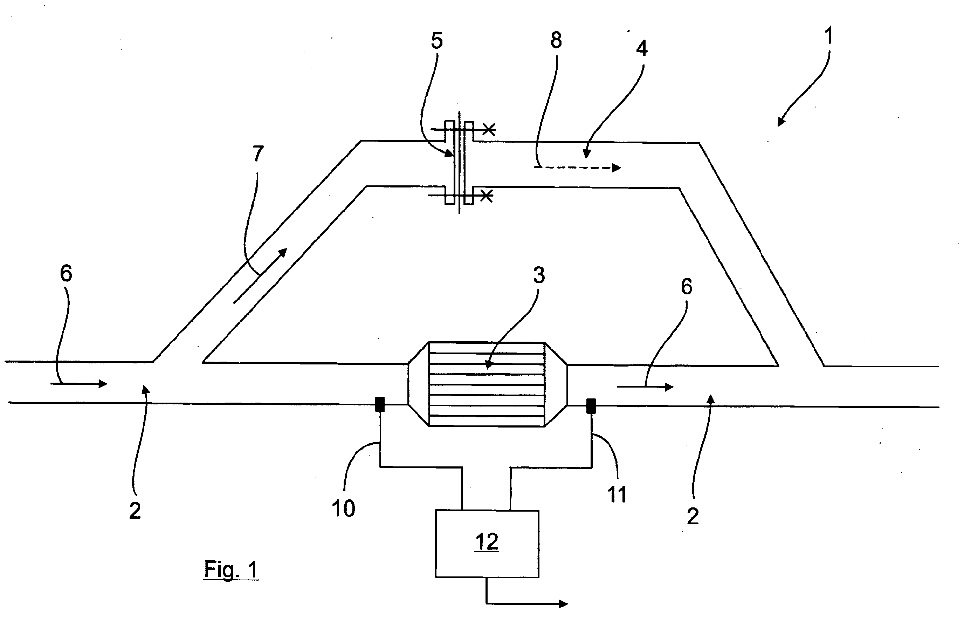

In der Fig. 1 ist beispielhaft eine Abgasanlage 1 einer nicht näher gezeigten Brennkraftmaschine, zum Beispiel einer Dieselbrennkraftmaschine, dargestellt, die eine Abgasleitung 2 aufweist, die von der nicht gezeigten Brennkraftmaschine abgeht und in der hier lediglich beispielhaft eine Abgasreinigungseinrichtung 3, zum Beispiel ein SCR-Katalysator, angeordnet ist.

Stromauf der Abgasreinigungseinrichtung 3 zweigt eine als Bypassleitung ausgebildete Abzweigleitung 4 von der Abgasleitung 2 ab, die stromab der Abgasreinigungseinrichtung 3 wieder in die Abgasleitung 2 einmündet.

Wie dies in der Fig. 1 lediglich äußerst schematisch und beispielhaft dargestellt ist, ist in der Abzweigleitung 4, im Grunde an beliebiger Stelle, eine Berstscheibe 5 angeordnet, die im unbeschädigten bzw. nicht aktivierten Zustand die Abzweigleitung 4 absperrt, so dass der Abgasstrom 6 vollständig über die Abgasreinigungseinrichtung 3 strömt und der erwünschten Reinigung bzw. Nachbehandlung unterzogen werden kann. Der in der schematischen Darstellung der Fig. 1 in die Abzweigleitung 4 einströmende Teilstrom 7 vermag daher bei einer Absperrung der Abzweigleitung 4 durch die Berstscheibe 5 nicht über die Abzweigleitung 4 zu strömen und damit nicht die Abgasreinigungseinrichtung 3 zu umgehen.

Für den Fall jedoch, dass sich zum Beispiel die Abgasreinigungseinrichtung 3 derart zusetzen bzw. verstopfen sollte, dass der Abgasstrom 6 nicht mehr in einem gewünschten Maße über die Abgasreinigungseinrichtung 3 geführt werden kann, wird der Abgasgegendruck stromauf der Abgasreinigungseinrichtung 3 wesentlich erhöht.

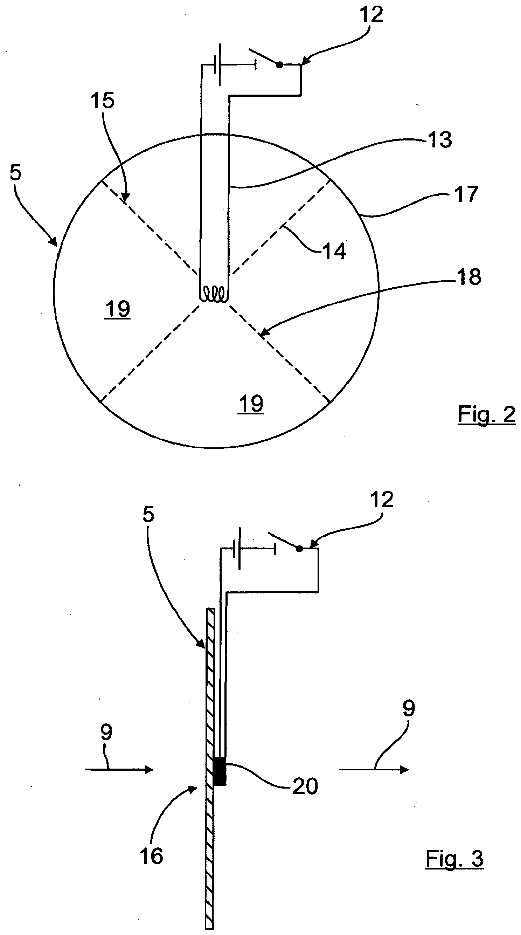

Mittels der Sensoren 9, 10, die hier lediglich beispielhaft stromauf und stromab der Abgasreinigungseinrichtung 3 angeordnet sind, kann dann der Druck stromauf bzw. stromab der Abgasreinigungseinrichtung 3 mittels einer Steuereinrichtung 12 erfasst und zum Beispiel ein Abgasgegendruck stromauf der Abgasreinigungseinrichtung 3 ermittelt werden. Überschreitet dieser Druckwert einen definiert vorgegebenen Schwellwert, aktiviert die Steuereinrichtung 12 eine Bersthilfe, die zum Beispiel, wie in der Fig. 2 dargestellt, durch ein elektrisches Heizelement 13 gebildet sein kann. Dieses elektrische Heizelement 13 ist hier beispielhaft zentral bzw. mittig an der Berstscheibe 5 angeordnet und bewirkt, dass der zugeordnete Berstscheibenwandbereich im aktivierten Zustand des elektrischen Heizelementes 13 erhitzt und dadurch insbesondere thermisch geschädigt bzw. zerstört wird.

Wie dies weiter aus der Fig. 2 ersichtlich ist, weist die Berstscheibe 5 hier Sollbruchstellen 14 auf, und zwar in Form von die Berstscheibenwand nicht durchdringenden Kerben. Diese Sollbruchstellen 14 weisen ein definiertes Sollbruchstellenmuster 15 auf, gemäß dem jeweils mehrere voneinander beabstandet und sich von einem mittleren Berstscheibenbereich 16 ausgehend nach radial außen zum Berstscheibenrand 17 hin erstreckende Sollbruchstellen 14 vorgesehen sind, die jeweils eine Sollbruchstellenlinie ausbilden. Mehrere dieser Sollbruchstellenlinien sind in Umfangsrichtung der Berstscheibe 5 jeweils, zum Beispiel gleichmäßig, voneinander beabstandet, so dass die jeweils zwischen zwei Sollbruchstellenlinien liegenden Berstscheibenbereiche ein verlagerbares bzw. verschwenkbares Berstscheibenwandsegment 18 ausbilden.

Das heißt, dass nach einer anfänglichen Schädigung bzw. Zerstörung des mittleren Berstscheibenbereichs 16 durch das elektrische Heizelement 13 durch den dann weiter anliegenden relativ hohen Abgasgegendruck eine gezielte Verlagerung der lappenartigen Berstscheibenwandsegmente 18 und damit eine kontrollierte Freigabe der Abzweigleitung 4 für den Abgasstrom erfolgen kann.

Das elektrische Heizelement 13 ist mit der lediglich beispielhaft dargestellten Steuereinrichtung 12 gekoppelt, die das elektrische Heizelement 13 dann ansteuert, wenn, ganz allgemein gesprochen, mittels wenigstens eines Sensors festgestellt worden ist, dass die Abgasströmung 8 über die Abzweigleitung 4 freizugeben ist. Mittels der Sensoren 10, 11 kann, wie zuvor dargestellt, zum Beispiel der Differenzdruck gemessen werden. Alternativ oder zusätzlich können aber selbstverständlich auch Temperatur- und/oder NOx-Sensoren verwendet bzw. deren Meßergebnisse herangezogen werden, um die Aktivierung des elektrischen Heizelementes 13 zu steuern. Anstelle der Anordnung von zwei Sensoren 10, 11 kann somit grundsätzlich auch nur ein Sensor stromauf oder stromab der Abgasreinigungseinrichtung 3 vorgesehen sein.

Das zuvor zur Fig. 2 Ausgeführte gilt in analoger Weise für die eine Seitenansicht einer Berstscheibe 5 zeigende Fig. 3, bei der dem zentralen bzw. mittigen Berstscheibenbereich 16 ein Sprengelement 20 mit einer Sprengladung zugeordnet ist, die den zugeordneten Berstscheibenwandbereich im aktivierten Zustand durch Zünden der Sprengladung zerstört.

Auch wenn bei den Fig. 2 und 3 die Bersthilfe lediglich auf einer Seite der Berstscheibe 5 beispielhaft und schematisch gezeigt ist, kann diese selbstverständlich auch auf der anderen Seite angeordnet werden, das heißt, im vorliegenden Beispielfall der Fig. 2 und 3, stromauf der Berstscheibe 5 angeordnet sein.

Auch eine beiderseitige Anordnung ist ebenso möglich wie eine Anordnung der Bersthilfen an unterschiedlichen Stellen der Berstscheibe 5.

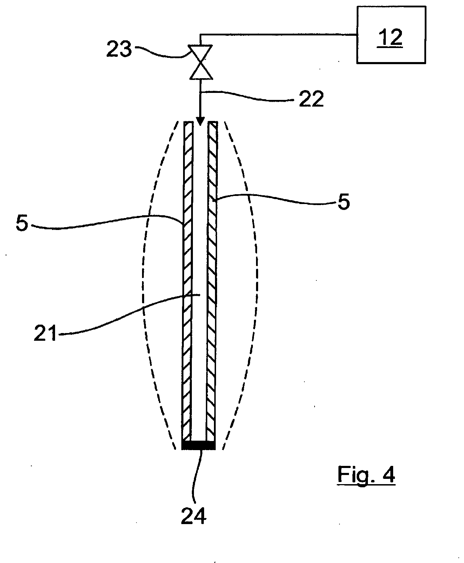

In der Fig. 4 ist schließlich eine Ausführungsform gezeigt, bei der zwei voneinander beabstandete bzw. im Wesentlichen parallel zueinander ausgerichtete Berstscheiben 5 vorgesehen sind, die zwischen sich einen, einen Freiraum 21 ausbildenden Spaltabstand aufweisen.

Der Freiraum 21 ist mittels einer Zuführeinrichtung 22 dergestalt mit einem gasförmigen, zum Beispiel Druckluft, oder flüssigen Arbeitsmedium als Bersthilfe beschickbar, dass ein vom Freiraum 21 und damit von Innen her auf die Berstscheibenwände wirkender Berstdruck aufgebaut werden kann, wie dies in der Fig. 4 strichliert dargestellt ist. Ab einem definierten Berstdruck birst dann die Berstscheibenanordnung aus zwei Berstscheiben, so dass dann die Abzweigleitung 4 für die Abgasströmung 8 freigegeben ist. Auch hier ist die Zuführeinrichtung 22 wiederum durch die Steuereinrichtung 12 entsprechend angesteuert.

Es versteht sich, dass die Zuführeinrichtung 22 mittels eines Absperrelementes 23 absperrbar ist. Das heißt, dass mittels der Steuereinrichtung 12 letztendlich das Absperrelement 23 angesteuert wird, um die Zuführung des Arbeitsmediums, zum Beispiel Druckluft, in den Freiraum 21 hinein zu ermöglichen.

Es versteht sich, dass die doppelwandige Berstscheibenanordnung 5 so ausgeführt sein muss, dass das zugeführte Arbeitsmedium die Berstscheiben 5 in der gezeigten Art und Weise aufblähen kann. Das heißt, dass der Anschluss der Zuführeinrichtung 22 entsprechend dicht auszuführen ist und dass die Berstscheiben 5 zum Beispiel randseitig dicht miteinander verbunden sein müssen, wie dies lediglich beispielhaft mittels der Verbindung 24 in der Fig. 4 dargestellt ist.

Desweiteren kann selbstverständlich auch sowohl bei der Berstscheibe gemäß der Fig. 3 als auch bei der Ausführungsform der Fig. 4 an den Berstscheiben 5 jeweils ein definiert vorgegebenes Sollbruchstellenmuster ausgebildet sein.

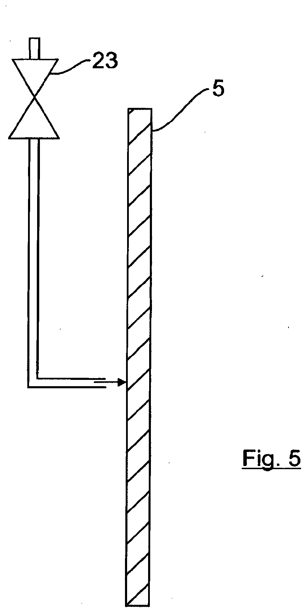

In der Fig. 5 ist eine weitere alternative Ausführungsform gezeigt, bei der der Berstscheibe 5 eine Druckluftzuführeinrichtung 26 als Bersthilfe zugeordnet ist, und zwar bevorzugt so, dass eine Mündungsöffnung der Druckluftzuführeinrichtung im Wesentlichen mittig auf die Berstscheibe 5 gerichtet ist. Mittels der Druckluftzuführeinrichtung 26 kann dann entsprechend gesteuert (und in analoger Weise zu den vorherigen Ausführungsformen) von der hier nicht gezeigten Steuereinrichtung 12 ein oder mehrere Druckluftimpulse und/oder -stöße, vorzugsweise intervall- oder pulsartig, auf die Berstscheibe 5 aufgebracht und diese somit zerstört werden. Es versteht sich, dass die Druckluftzuführeinrichtung 26 mittels eines Absperrelementes 23 absperrbar ist. Das heißt, dass mittels der Steuereinrichtung 12 letztendlich das Absperrelement 23 angesteuert wird, um die Zuführung der Druckluft bzw. jedes anderen geeigneten gasförmigen oder flüssigen Mediums zu ermöglichen.

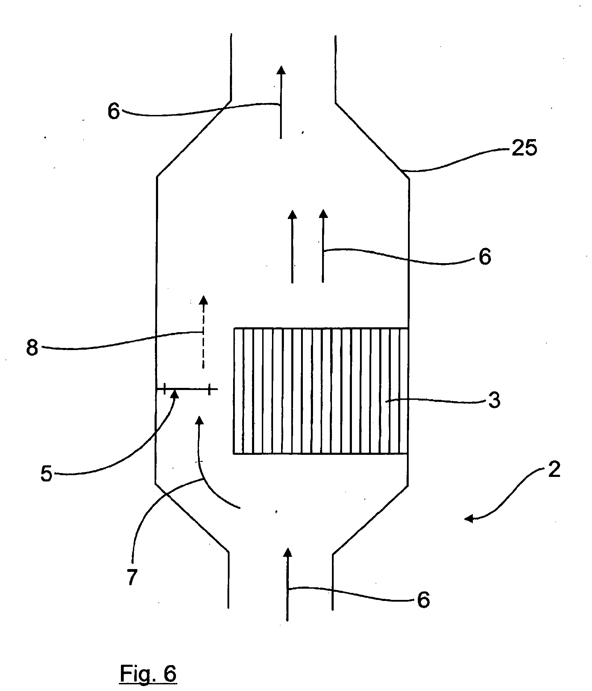

In der Fig. 6 ist schließlich eine weitere Abgasanlage gezeigt, bei der die wenigstens eine Abgasreinigungseinrichtung 3, zum Beispiel ein SCR-Katalysator, zusammen mit einer Berstscheibeneinrichtung 5 in einem gemeinsamen Gehäuse 25 angeordnet bzw. integriert sind. Die einen gehäuseseitigen Abzweigkanal 4 verschließende Berstscheibeneinrichtung 5 und die Abgasreinigungseinrichtung 3 sind hierbei strömungstechnisch parallel angeordnet, so dass bei intakter Berstscheibeneinrichtung 5 das Abgas alleine durch die Abgasreinigungseinrichtung 3 strömt. Bei einem definiert hohen Berstdruck birst dagegen die Berstscheibeneinrichtung 5 in der zuvor beschriebenen Art und Weise, so dass zumindest ein Teilstrom 7 dann auch durch den Abzweigkanal 4 strömen kann (Abgasströmung 8). Die Berstscheibeneinrichtung 5 liegt hier nur beispielhaft seitlich neben der Abgasreinigungseinrichtung 3. Gegebenenfalls kann die Abgasreinigungseinrichtung auch zentral im Gehäuse 25 gehaltert sein und umlaufend von einer entsprechend gestalteten Berstscheibeneinrichtung 5 umgeben sein. Auch wenn die Berstscheibeneinrichtung 5 hier bevorzugt so ausgebildet ist, wie dies zuvor ausführlich beschrieben worden ist, kann diese bei der in der Fig. 5 beispielhaft gezeigten gehäuseintegrierten Lösung selbstverständlich ausdrücklich auch ohne eine Bersthilfe ausgebildet sein und zum Beispiel durch eine herkömmliche Berstscheibe bzw. Berstplatte, wie sie zum Beispiel in der DE 102 06 805 A1 beschrieben ist, und damit durch jedwede geeignete Bersteinrichtung gebildet sein.

### Bezugszeichenliste

- 1: Abgasanlage
- 2: Abgasleitung
- 3: Abgasreinigungseinrichtung
- 4: Abzweigleitung
- 5: Berstscheiben
- 6: Abgasstrom
- 7: Teilstrom
- 8: Abgasströmung
- 9: Strömungsrichtung
- 10: Sensor
- 11: Sensor
- 12: Steuereinrichtung
- 13: elektrisches Heizelement
- 14: Sollbruchstellen
- 15: Sollbruchstellenmuster
- 16: mittlerer Berstscheibenbereich
- 17: Berstscheibenrand
- 18: Sollbruchstellenlinie
- 19: Berstscheibenwandsegment
- 20: Sprengelement
- 21: Freiraum
- 22: Zuführeinrichtung
- 23: Absperrelement
- 24: Verbindung
- 25: Gehäuse
- 26: Druckluftzuführeinrichtung

## Patentansprüche

1. Abgasanlage für Brennkraftmaschinen,
mit einer Abgasleitung (2), in der wenigstens eine Abgasreinigungseinrichtung (3) angeordnet ist, und
mit wenigstens einem parallel zu der wenigstens einen Abgasreinigungseinrichtung (3) angeordneten Abzweigkanal (4), der mittels wenigstens einer Berstscheibe (5) abgesperrt ist, wobei der Berstscheibe (5) eine mittels einer Steuereinrichtung (12) in Abhängigkeit von wenigstens einem definiert vorgegebenen Parameter, insbesondere in Abhängigkeit von einem Erreichen oder Überschreiten eines definiert vorgegebenen Schwellwertes, ansteuerbare und aktivierbare Bersthilfe zugeordnet ist,
**dadurch gekennzeichnet,**
**dass** die Bersthilfe durch ein gasförmiges oder flüssiges Arbeitsmedium gebildet ist, mittels dem oder mittels denen die wenigstens eine Berstscheibe zur Freigabe der Abgasströmung durch den Abzweigkanal (4) schwächbar und/oder zerstörbar ist.

2. Abgasanlage nach Anspruch 1, **dadurch gekennzeichnet, dass** wenigstens ein Sensor (10, 11) stromauf und/oder stromab der Abgasreinigungseinrichtung (3) angeordnet ist, mittels dem der wenigstens eine Parameter erfassbar ist, in Abhängigkeit von dem die Bersthilfe ansteuerbar und aktivierbar ist.

3. Abgasanlage nach einem der vorhergehenden Ansprüche, **dadurch gekennzeichnet, dass** die Berstscheibe (5) wenigstens bereichsweise doppelwandig ausgebildet ist und einen zwischen gegenüberliegenden Wandbereichen liegenden Freiraum (21) aufweist, wobei der Freiraum (21) mittels einer Zuführeinrichtung (22) dergestalt mit dem gasförmigen oder flüssigen Arbeitsmedium beschickbar ist, das ein vom Freiraum (21) und damit von innen her auf die Berstscheibenwände wirkender Berstdruck aufbaubar ist.

4. Abgasanlage nach Anspruch 3, **dadurch gekennzeichnet, dass** zwei voneinander beabstandete und/oder im Wesentlichen parallel zueinander ausgerichtete Berstscheiben (5) vorgesehen sind, die zwischen sich einen den Freiraum (21) ausbildenden Spaltabstand aufweisen.

5. Abgasanlage nach einem der vorhergehenden Ansprüche, **dadurch gekennzeichnet, dass** der Berstscheibe (5) eine Druckluftzuführeinrichtung (26) als Bersthilfe zugeordnet ist, insbesondere eine Mündungsöffnung der Druckluftzuführeinrichtung (26) im Wesentlichen mittig auf die Berstscheibe (5) gerichtet ist, mittels der ein Druckluftimpuls und/oder -stoß, vorzugsweise intervall- oder pulsartig, gesteuert auf einen definierten Bereich der Berstscheibe (5) aufbringbar ist.

6. Abgasanlage nach einem der vorhergehenden Ansprüche, **dadurch gekennzeichnet, dass** die wenigstens eine Berstscheibe (5) oder im Falle mehrerer Berstscheiben (5) wenigstens eine der Berstscheiben (5), insbesondere wenigstens die stromauf liegende Berstscheibe, wenigstens eine definierte Sollbruchstelle (14) aufweist.

7. Abgasanlage nach Anspruch 6, **dadurch gekennzeichnet, dass** die wenigstens eine Sollbruchstelle (14) durch eine die Berstscheibenwand nicht durchdringende Kerbe gebildet ist, bevorzugt eine Sollbruchstellen (14) aufweisende Berstscheibe (5) mehrere Kerben aufweist, die ein definiert vorgegebenes Sollbruchstellenmuster (15) ausbilden.

8. Abgasanlage nach Anspruch 6 oder 7, **dadurch gekennzeichnet,**
**dass** mehrere voneinander beabstandete und sich von einem mittleren Berstscheibenbereich (16) ausgehend nach radial außen zum Berstscheibenrand (17) hin erstreckende Sollbruchstellen (14) vorgesehen sind, die eine Sollbruchstellenlinie (18) ausbilden, und
**dass** mehrere derartiger Sollbruchstellenlinien (18) in Umfangsrichtung der Berstscheibe (5) voneinander beabstandet sind dergestalt, dass die zwischen zwei Sollbruchstellenlinien (18) liegenden Berstscheibenbereiche ein verlagerbares, insbesondere verschwenkbares, Berstscheibenwandsegment (19) ausbilden.

9. Abgasanlage nach einem der vorhergehenden Ansprüche, **dadurch gekennzeichnet, dass** der Abzweigkanal (4) stromab der wenigstens einen Abgasreinigungseinrichtung (3) oder stromab wenigstens einer Abgasreinigungseinrichtung (3) wieder in die Abgasleitung (2) einmündet.

10. Abgasanlage nach einem der vorhergehenden Ansprüche, **dadurch gekennzeichnet, dass** stromauf und/oder stromab der wenigstens einen Abgasreinigungseinrichtung (3) oder wenigstens einer Abgasreinigungseinrichtung (3) wenigstens ein Sensor (10, 11) angeordnet ist, mittels dem ein definierter Parameter, insbesondere ein definierter Abgasparameter, erfassbar und der Steuereinrichtung (12) übermittelbar ist.

11. Fahrzeug, insbesondere Nutzfahrzeug, oder Wasserfahrzeug mit einer Brennkraftmaschine mit einer Abgasanlage (1) nach einem der vorhergehenden Ansprüche.

## Claims

1. Exhaust system for combustion engines,
having an exhaust line (2), in which at least one exhaust gas purification device (3) is arranged, and
having at least one branch duct (4), which is arranged in parallel with the at least one exhaust gas purification device (3) and is shut off by means of at least one bursting disc (5), wherein the bursting disc (5) is assigned a bursting aid that can be controlled and activated by means of a control device (12) in accordance with at least one defined parameter, in particular in accordance with attainment or overshooting of a defined threshold,
**characterized**
**in that** the bursting aid is formed by a gaseous or liquid working medium, by means of which the at least one bursting disc can be weakened and/or destroyed to allow the exhaust gas flow through the branch duct (4).

2. Exhaust system according to Claim 1, **characterized in that** at least one sensor (10, 11) is arranged upstream and/or downstream of the exhaust gas purification device (3), by means of which sensor the at least one parameter, in accordance with which the bursting aid can be controlled and activated, can be detected.

3. Exhaust system according to one of the preceding claims, **characterized in that** the bursting disc (5) is of double-walled design, at least in some region or regions, and has a free space (21) situated between opposite wall regions, wherein the free space (21) can be supplied with the gaseous or liquid working medium by means of a feed device (22) in such a way that a bursting pressure acting on the bursting disc walls from the free space (21) and thus from inside can be built up.

4. Exhaust system according to Claim 3, **characterized in that** two bursting discs (5) spaced apart from one another and/or aligned substantially parallel to one another are provided, having between them a clearance that forms the free space (21).

5. Exhaust system according to one of the preceding claims, **characterized in that** the bursting disc (5) is assigned a compressed air feed device (26) as a bursting aid, in particular a mouth opening of the compressed air feed device (26) is directed substantially centrically at the bursting disc (5), by means of which a compressed air pulse and/or surge, preferably at intervals or in a pulsed manner, can be applied in a controlled manner to a defined region of the bursting disc (5).

6. Exhaust system according to one of the preceding claims, **characterized in that** the at least one bursting disc (5) or, in the case of a plurality of bursting discs (5), at least one of the bursting discs (5), in particular at least the upstream bursting disc, has at least one defined predetermined breaking point (14).

7. Exhaust system according to Claim 6, **characterized in that** the at least one predetermined breaking point (14) is formed by a notch which does not penetrate the bursting disc wall, preferably a bursting disc (5) having predetermined breaking points (14) has a plurality of notches, which form a defined pattern (15) of predetermined breaking points.

8. Exhaust system according to Claim 6 or 7, **characterized**
**in that** a plurality of predetermined breaking points (14), which are spaced apart and extend radially outwards towards the bursting disc rim (17) from a central bursting disc region (16), is provided, forming a line (18) of predetermined breaking points, and
**in that** a plurality of such lines (18) of predetermined breaking points is spaced apart in the circumferential direction of the bursting disc (5) in such a way that the bursting disc regions situated between two lines (18) of predetermined breaking points form a movable, in particular pivotable, bursting disc wall segment (19).

9. Exhaust system according to one of the preceding claims, **characterized in that** the branch duct (4) opens back into the exhaust line (2) downstream of the at least one exhaust gas purification device (3) or downstream of at least one exhaust gas purification device (3).

10. Exhaust system according to one of the preceding claims, **characterized in that** at least one sensor (10, 11) is arranged upstream and/or downstream of the at least one exhaust gas purification device (3) or of at least one exhaust gas purification device (3), by means of which sensor a defined parameter, in particular a defined exhaust gas parameter, can be detected and transmitted to the control device (12).

11. Vehicle, in particular commercial vehicle, or watercraft, having a combustion engine having an exhaust system (1) according to one of the preceding claims.

## Revendications

1. Installation de gaz d'échappement pour moteurs à combustion interne, l'installation présentant
un conduit (2) de gaz d'échappement dans lequel est disposé au moins un dispositif (3) d'épuration des gaz d'échappement,
au moins un canal de dérivation (4) disposé parallèlement au dispositif ou aux dispositifs (3) d'épuration des gaz d'échappement et bloqué au moyen d'au moins un disque d'éclatement (5), un accessoire d'éclatement apte à être commandé et activé au moyen d'un dispositif de commande (12) en fonction d'au moins un paramètre préalablement défini, en particulier en fonction de l'atteinte ou du dépassement d'une valeur de seuil prédéterminée, étant associé au disque d'éclatement (5),
**caractérisée en ce que**
l'accessoire d'éclatement est formé par un fluide de travail gazeux ou liquide au moyen duquel ou au moyen desquels le ou les disques d'éclatement peuvent être affaiblis et/ou détruits pour libérer l'écoulement des gaz d'échappement dans le canal de dérivation (4).

2. Installation de gaz d'échappement selon la revendication 1, **caractérisée en ce qu'**au moins un capteur (10, 11) au moyen duquel le ou les paramètres en fonction desquels l'accessoire d'éclatement peut être commandé et activé peut être saisi est disposé en amont et/ou en aval du dispositif (3) d'épuration des gaz d'échappement.

3. Installation de gaz d'échappement selon l'une des revendications précédentes, **caractérisée en ce que** le disque d'éclatement (5) est réalisé au moins en partie à double paroi et présente un espace libre (21) situé entre des parties de paroi mutuellement opposées, l'espace libre (21) pouvant être rempli au moyen d'un dispositif d'amenée (22) en fluide de travail gazeux ou liquide de telle sorte qu'une pression d'éclatement agissant de l'intérieur sur les parois du disque d'éclatement puisse être établie dans l'espace libre (21).

4. Installation de gaz d'échappement selon la revendication 3, **caractérisée en ce que** deux disques d'éclatement (5) disposés à distance mutuelle et/ou orientés essentiellement en parallèle l'un à l'autre sont prévus et présentent entre eux un interstice qui forme l'espace libre (21).

5. Installation de gaz d'échappement selon l'une des revendications précédentes, **caractérisée en ce qu'**un dispositif (26) d'amenée d'air comprimé est associé en tant qu'accessoire d'éclatement au disque d'éclatement (5), en particulier une ouverture d'embouchure du dispositif (26) d'amenée d'air comprimé orientée essentiellement au centre du disque d'éclatement (5), au moyen de laquelle une impulsion et/ou un coup d'air comprimé, peut être appliquée de manière commandée sur une partie définie du disque d'éclatement (5), de préférence à intervalles ou de manière puisée.

6. Installation de gaz d'échappement selon l'une des revendications précédentes, **caractérisée en ce que** le ou les disques d'éclatement (5) ou, dans le cas de plusieurs disques d'éclatement (5), au moins l'un des disques d'éclatement (5), en particulier au moins le disque d'éclatement situé en amont, présente au moins un emplacement défini (14) de rupture préférentielle.

7. Installation de gaz d'échappement selon la revendication 6, **caractérisée en ce que** le ou les emplacements (14) de rupture préférentielle sont formés par une entaille qui ne traverse pas la paroi du disque d'éclatement, de préférence un disque d'éclatement (5) présentant des emplacements (14) de rupture préférentielle présentant plusieurs entailles qui forment un motif prédéfini (15) d'emplacements de rupture préférentielle.

8. Installation de gaz d'échappement selon les revendications 6 ou 7, **caractérisée**
**en ce que** plusieurs emplacements (14) de rupture préférentielle partant d'une partie centrale (16) du disque d'éclatement et s'étendant radialement vers l'extérieur en direction du bord (17) du disque d'éclatement sont prévus et forment une ligne (18) d'emplacements de rupture préférentielle et
**en ce que** plusieurs de ces lignes (18) d'emplacements de rupture préférentielle sont situées à distance mutuelle dans la direction périphérique du disque d'éclatement (5) de telle sorte que les parties du disque d'éclatement situées entre deux lignes (18) d'emplacements de rupture préférentielle forment un segment (19) de paroi de disque d'éclatement déplaçable en particulier pivotant.

9. Installation de gaz d'échappement selon l'une des revendications précédentes, **caractérisée en ce que** le canal de dérivation (4) débouche en amont du ou des dispositifs (3) d'épuration des gaz d'échappement ou en amont d'au moins un dispositif (3) d'épuration des gaz d'échappement pour revenir dans le conduit (2) de gaz d'échappement.

10. Installation de gaz d'échappement selon l'une des revendications précédentes, **caractérisée en ce qu'**au moins un capteur (10, 11) au moyen duquel un paramètre soit défini, en particulier un paramètre défini des gaz d'échappement, peut être saisi et transmis au dispositif de commande (12) est prévu en amont et/ou en aval du ou des dispositifs (3) d'épuration des gaz d'échappement ou d'au moins un dispositif (3) d'épuration des gaz d'échappement.

11. Véhicule, notamment véhicule utilitaire ou navire présentant un moteur à combustion interne doté d'une installation (1) de gaz d'échappement selon l'une des revendications précédentes.
